# DEMANDE DE BREVET EUROPEEN

(11) **EP 4 517 714 A1**
(43) Date de publication de la demande: **05.03.2025**
(21) Numéro de dépôt: 24196412.1
(22) Date de dépôt: 26.08.2024
(51) Int. Cl.: G08G 5/00, G08G 5/06

(54) **PROCEDE DE GESTION DE TRAJECTOIRES DE ROULAGE**

(30) Priorité: 31.08.2023 FR 2309165
(71) Demandeur: Airbus SAS, 31700 Blagnac Cedex (FR); Airbus Operations (S.A.S.), 31060 Toulouse Cedex 9 (FR)
(72) Inventeur: MAZOIN, Benjamin, 31060 TOULOUSE (FR); FERSING, Laura, 31700 BLAGNAC (FR)
(74) Mandataire: Cabinet Le Guen Maillet

(57) **Abrégé**

Un procédé (100) de gestion de trajectoires de roulage d'un aéronef comprenant au moins un système informatique (200), le procédé étant implémenté par le système informatique (200). Le procédé comprend les étapes suivantes :
- éditer (101) une trajectoire initiale (2a) ;
- afficher (102) un tracé de la trajectoire initiale (2a) sur un écran (221) en utilisant une première symbolique (4) de tracé ;
- obtenir (104) une validation de la trajectoire initiale (2b) ;
- afficher (106) un tracé de la trajectoire initiale (2b) validée sur l'écran en utilisant une deuxième symbolique (10b) de tracé ;
- implémenter (108) la trajectoire initiale validée (2b) dans une consigne de roulage de l'aéronef.

Le procédé (100) comprend en outre un processus d'édition et un processus d'affichage indépendant.

## Description

### ETAT DE LA TECHNIQUE ANTERIEURE

D'une manière connue, les aéronefs sont amenés à circuler au sol sur les aéroports entre une porte d'embarquement ou de débarquement des passagers et une piste de décollage ou d'atterrissage. Pour cela, ils suivent chacun une trajectoire sur la surface de l'aéroport. Cette trajectoire est généralement conforme à une clairance (c'est-à-dire une autorisation) de roulage reçue du contrôle aérien (« clearance » en anglais). Elle comprend généralement un roulage sur des voies de circulation (« taxiways » en anglais) ou des segments de voies de circulation (segments de taxiways), ainsi que des points de passage.

Les aéronefs modernes disposent généralement d'un système de navigation aéroportuaire qui comprend un écran de navigation prévu pour afficher une trajectoire de navigation souhaitée sur une carte d'un aéroport. Lors du roulage au sol, le système de navigation affiche en outre une position courante de l'aéronef sur l'écran de navigation. Pour permettre un bon fonctionnement du système de navigation, il est souhaitable qu'un membre d'équipage de conduite (pilote ou copilote) configure la trajectoire de navigation souhaitée dans le système de navigation avant la phase de roulage au sol. Les systèmes de navigation actuels comprennent un champ d'édition de la trajectoire souhaitée, dans lequel un pilote peut saisir une trajectoire souhaitée ou insérer une clairance (« clearance » en anglais) reçue du contrôle aérien. Toutefois, lorsque le pilote souhaite modifier une trajectoire déjà validée (que ce soit une trajectoire saisie par le pilote ou une clairance reçue du contrôle aérien), ces systèmes actuels ne lui permettent pas de distinguer les modifications apportées par rapport à la trajectoire préalablement validée. Ainsi, il est difficile pour le pilote de comparer la trajectoire en cours de modification avec la trajectoire préalablement validée, ce qui rend difficile un choix entre un abandon ou une poursuite d'une modification en cours d'une trajectoire. Les pilotes sont parfois amenés à noter les changements sur un papier au moyen d'un crayon afin de les comparer avec la route initiale. Cela ne permet pas une facilité d'interaction qui serait pourtant souhaitable pour exécuter un simple changement de trajectoire pendant un roulage au sol.

Dans ce contexte, il est nécessaire de fournir un procédé de gestion de trajectoires qui permette d'éditer, d'afficher et d'implémenter une trajectoire simplement.

### EXPOSE DE L'INVENTION

A cet effet, selon un premier aspect, il est proposé un procédé de gestion de trajectoires de roulage d'un aéronef, l'aéronef comprenant au moins un système informatique comprenant de la circuiterie électronique et une interface homme-machine comprenant au moins un écran d'affichage, le procédé étant implémenté par le système informatique.

Le procédé comprend au moins les étapes suivantes :
- recevoir d'un utilisateur, par l'interface homme-machine, des instructions d'édition et éditer une trajectoire initiale en fonction desdites instructions ;
- commander l'affichage sur l'écran d'un tracé de la trajectoire initiale en cours d'édition, en utilisant une première symbolique de tracé ;
- recevoir une instruction de validation de la trajectoire initiale par l'utilisateur via l'interface homme-machine ;
- commander l'affichage sur l'écran d'un tracé de la trajectoire initiale validée par l'utilisateur, en utilisant une deuxième symbolique de tracé ;
- implémenter la trajectoire initiale validée par l'utilisateur dans une consigne de roulage de l'aéronef.

Le procédé comprend en outre un processus d'édition qui comprend les étapes suivantes :
- recevoir de l'utilisateur, par l'interface homme-machine, des instructions d'édition et éditer une trajectoire alternative en fonction desdites instructions d'édition ;
- commander l'affichage sur l'écran d'un tracé de la trajectoire alternative en cours d'édition en utilisant la première symbolique de tracé ;
- recevoir une instruction de validation de la trajectoire alternative par l'utilisateur via l'interface homme-machine ;
- remplacer l'affichage du tracé de la trajectoire initiale validée par l'utilisateur, par l'affichage du tracé de la trajectoire alternative validée par l'utilisateur, sur l'écran en utilisant la deuxième symbolique de tracé ;
- implémenter la trajectoire alternative validée par l'utilisateur dans la consigne de roulage de l'aéronef.

Le procédé comprend en parallèle un processus d'affichage indépendant qui comprend :
- commander l'affichage sur l'écran d'un objet graphique sélectionnable via l'interface homme-machine, l'objet graphique étant distinct pour chaque trajectoire ; et
- recevoir une instruction de sélection par l'utilisateur de l'objet graphique via l'interface homme-machine et afficher sur ledit écran la trajectoire correspondant à l'objet graphique sélectionné.

Ainsi le procédé de gestion permet d'éditer une trajectoire initiale, de la valider et de l'implémenter dans la consigne de roulage de l'aéronef. En outre, le procédé selon l'invention permet d'éditer une trajectoire alternative, de l'afficher, de la valider et de l'implémenter dans la consigne de roulage de l'aéronef. Ainsi, en d'autres termes, le procédé selon l'invention permet très avantageusement de gérer plusieurs trajectoires de roulage, de les éditer et de les afficher en utilisant des symboliques de tracés distinctes qui permettent à un utilisateur de distinguer aisément les différentes trajectoires.

Selon une disposition particulière, le procédé comprend l'édition de plusieurs trajectoires alternatives distinctes.

Selon une disposition particulière, le procédé comprend d'afficher un tracé de chacune des trajectoires alternatives distinctes en utilisant une symbolique de tracé distincte pour chacune des trajectoires alternatives distinctes.

Selon une disposition particulière, le procédé comprend de sélectionner une trajectoire alternative parmi les plusieurs trajectoires alternatives distinctes, puis obtenir une validation de la trajectoire alternative sélectionnée.

Selon une disposition particulière, le procédé comprend de recevoir une instruction d'annulation, par une sélection de l'objet graphique par l'utilisateur sur l'interface homme-machine et, comprend d'annuler la trajectoire correspondant à l'objet graphique.

Selon une disposition particulière, le procédé comprend de recevoir une instruction d'édition, par une sélection de l'objet graphique par l'utilisateur sur l'interface homme-machine et d'implémenter le processus d'édition de la trajectoire correspondant à l'objet graphique.

Selon une disposition particulière, le procédé comprend de :
- recevoir une trajectoire d'une autorité de contrôle aérien ;
- recevoir de l'utilisateur, via l'interface homme-machine, une instruction d'affichage de la trajectoire reçue de l'autorité de contrôle aérien ;
- commander l'affichage sur l'écran d'un tracé de la trajectoire reçue de l'autorité de contrôle aérien, en utilisant une troisième symbolique de tracé ;
- recevoir de l'utilisateur, via l'interface homme-machine, une instruction de validation de la trajectoire reçue du contrôle aérien ;
- remplacer l'affichage du tracé de la trajectoire validée par l'utilisateur, par l'affichage du tracé de la trajectoire reçue de l'autorité de contrôle aérien puis validée par l'utilisateur, sur l'écran en utilisant la deuxième symbolique de tracé ;
- implémenter la trajectoire reçue de l'autorité de contrôle aérien puis validée par l'utilisateur, dans une consigne de roulage de l'aéronef.

Selon une disposition particulière, le procédé comprend de :
- recevoir une trajectoire d'une autorité de contrôle aérien ;
- recevoir de l'utilisateur, via l'interface homme-machine, une instruction d'affichage de la trajectoire reçue de l'autorité de contrôle aérien ;
- commander l'affichage sur l'écran d'un tracé de la trajectoire reçue de l'autorité de contrôle aérien, en utilisant une troisième symbolique de tracé ;
- recevoir de l'utilisateur, par l'interface homme-machine, des instructions d'édition et éditer la trajectoire reçue de l'autorité de contrôle aérien en fonction desdites instructions d'édition ;
- commander l'affichage sur l'écran d'un tracé de la trajectoire en cours d'édition en utilisant la première symbolique de tracé ;
- recevoir de l'utilisateur, via l'interface homme-machine, une instruction de validation de la trajectoire en cours d'édition ;
- remplacer l'affichage du tracé de la trajectoire validée par l'utilisateur, par l'affichage du tracé de la trajectoire reçue de l'autorité de contrôle aérien puis éditée et validée par l'utilisateur, sur l'écran en utilisant la deuxième symbolique de tracé ;
- implémenter la trajectoire reçue de l'autorité de contrôle aérien puis éditée et validée par l'utilisateur, dans une consigne de roulage de l'aéronef.

Selon un autre aspect, il est proposé un système informatique de gestion d'une trajectoire de roulage d'un aéronef comprenant de la circuiterie électronique pour implémenter le procédé de gestion d'une trajectoire de roulage d'un aéronef comprenant au moins les étapes suivantes :
- recevoir d'un utilisateur, par l'interface homme-machine, des instructions d'édition et éditer une trajectoire initiale en fonction desdites instructions ;
- commander l'affichage sur l'écran d'un tracé de la trajectoire initiale en cours d'édition, en utilisant une première symbolique de tracé ;
- recevoir une instruction de validation de la trajectoire initiale par l'utilisateur via l'interface homme-machine ;
- commander l'affichage sur l'écran d'un tracé de la trajectoire initiale validée par l'utilisateur, en utilisant une deuxième symbolique de tracé ;
- implémenter la trajectoire initiale validée par l'utilisateur dans une consigne de roulage de l'aéronef ;

le procédé comprenant en outre un processus d'édition qui comprend les étapes suivantes :
   - recevoir de l'utilisateur, par l'interface homme-machine, des instructions d'édition et éditer une trajectoire alternative en fonction desdites instructions d'édition ;
   - commander l'affichage sur l'écran d'un tracé de la trajectoire alternative en cours d'édition en utilisant la première symbolique de tracé ;
   - recevoir une instruction de validation de la trajectoire alternative par l'utilisateur via l'interface homme-machine ;
   - remplacer l'affichage du tracé de la trajectoire initiale validée par l'utilisateur, par l'affichage du tracé de la trajectoire alternative validée par l'utilisateur, sur l'écran en utilisant la deuxième symbolique de tracé ;
   - implémenter la trajectoire alternative validée par l'utilisateur dans la consigne de roulage de l'aéronef ; et
le procédé comprenant en parallèle un processus d'affichage indépendant qui comprend :
   - commander l'affichage sur l'écran d'un objet graphique sélectionnable via l'interface homme-machine, l'objet graphique étant distinct pour chaque trajectoire ; et
   - recevoir une instruction de sélection par l'utilisateur de l'objet graphique via l'interface homme-machine et afficher sur l'écran la trajectoire correspondant à l'objet graphique sélectionné.

Selon une disposition particulière, l'écran d'affichage présente au moins une zone d'affichage d'une trajectoire et au moins une zone d'affichage d'un objet graphique sélectionnable.

Selon une disposition particulière, au moins une zone d'affichage d'une trajectoire est prévue pour afficher au moins l'une parmi une trajectoire validée par un utilisateur, une trajectoire en cours d'édition et une trajectoire reçue d'une autorité de contrôle aérien.

Selon une disposition particulière, le système informatique comprend au moins une zone d'affichage d'un champ textuel.

Selon un autre aspect, il est proposé un aéronef comprenant un système informatique selon l'invention.

Selon un autre aspect, il est proposé un produit programme d'ordinateur comprenant des instructions de code de programme pour exécuter le procédé l'invention, lorsque lesdites instructions sont exécutées par au moins un processeur.

Selon un autre aspect, il est proposé un support de stockage non transitoire sur lequel est stocké un programme d'ordinateur comprenant des instructions de code de programme pour exécuter le procédé selon l'invention, lorsque lesdites instructions sont lues depuis ledit support de stockage non transitoire et exécutées par un processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un procédé de gestion de trajectoires de roulage ;
[Fig. 2] illustre schématiquement un procédé d'édition d'un procédé de gestion de trajectoire de roulage ;
[Fig. 3] illustre schématiquement un procédé d'affichage compris dans un procédé de gestion de trajectoire de roulage ;
[Fig. 4] illustre schématiquement un agencement matériel d'un système informatique qui comprend de la circuiterie électronique pour implémenter le procédé de gestion de trajectoire de roulage ;
[Fig. 5] illustre schématiquement l'affichage de plusieurs objets graphiques ;
[Fig. 6] illustre schématiquement la réception d'une trajectoire transmise par une autorité de contrôle aérien.

### EXPOSE DETAILLE DE MODES DE REALISATION

### Procédé de gestion de trajectoires

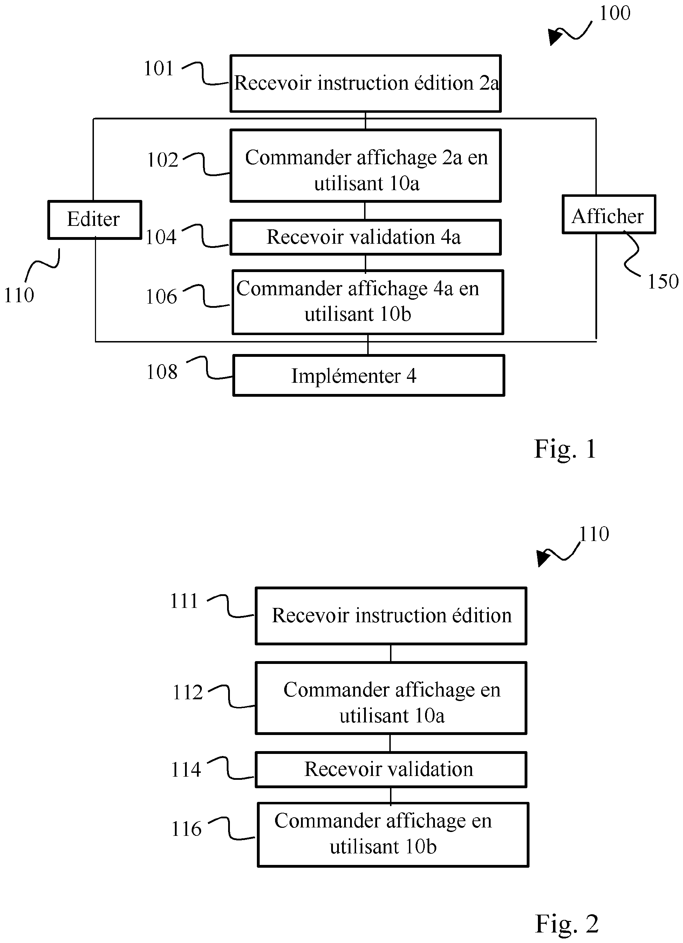

En référence à la Fig. 1, selon un premier aspect, il est proposé un procédé 100 de gestion de trajectoires de roulage d'un aéronef.

Le procédé 100 est implémenté par un système informatique 200 de l'aéronef qui sera décrit ci-après. Le système informatique 200 comprend au moins une interface homme-machine 220 qui comprend un écran 221 d'affichage.

Un statut est associé à chaque trajectoire de roulage. Ce statut peut prendre au moins l'une des deux valeurs suivantes : « trajectoire en cours d'édition » ou « trajectoire validée ».

Le procédé 100 comprend au moins les étapes suivantes :
- recevoir d'un utilisateur, par l'interface homme-machine 220, des instructions d'édition et éditer 101 une trajectoire initiale 2a en fonction desdites instructions ;
- attribuer la valeur « trajectoire en cours d'édition » au statut associé à la trajectoire initiale 2a ;
- commander l'affichage 102 sur l'écran 221 d'un tracé de la trajectoire initiale 2a en cours d'édition, en utilisant une première symbolique 10a de tracé ;
- recevoir 104 une instruction de validation de la trajectoire initiale 4a par l'utilisateur via l'interface homme-machine 220 ;
- attribuer la valeur « trajectoire validée » au statut associé à la trajectoire initiale 4a ;
- commander l'affichage 106 sur l'écran 221 d'un tracé de la trajectoire initiale 4a validée par l'utilisateur, en utilisant une deuxième symbolique 10b de tracé ;
- implémenter 108 la trajectoire initiale validée 4a par l'utilisateur dans une consigne de roulage de l'aéronef.

En outre, le procédé 100 comprend un processus d'édition 110 qui sera détaillé ci-après. Tel que cela sera détaillé ci-après, le processus d'édition 110 permet d'éditer une trajectoire alternative 2b.

De plus, le procédé 100 comprend aussi en parallèle un processus d'affichage 150 indépendant qui sera détaillé ci-après. Tel que cela sera décrit ci-après, le processus d'affichage permet d'afficher des objets graphiques 20 sélectionnables. Un objet graphique sélectionnable est associé à chaque trajectoire de roulage.

Ainsi le procédé 100 de gestion permet d'éditer une trajectoire initiale 2a, de la valider et de l'implémenter dans la consigne de roulage de l'aéronef. En outre, le procédé selon l'invention permet d'éditer une trajectoire alternative 2b, de l'afficher, de la valider et de l'implémenter dans la consigne de roulage de l'aéronef. Ainsi, en d'autres termes, le procédé 100 selon l'invention permet très avantageusement de gérer plusieurs trajectoires de roulage, de les éditer et de les afficher en utilisant des symboliques de tracés 10 distinctes qui permettent à un utilisateur de distinguer aisément les différentes trajectoires.

En d'autres termes, l'invention propose un procédé 100 de gestion de trajectoires qui permet d'éditer, d'afficher et d'implémenter une trajectoire simplement. Notamment, l'implémentation en parallèle du processus d'affichage 150 permet d'afficher en permanence un ou plusieurs objets graphiques 20 sélectionnables, quelle que soit l'étape en cours d'implémentation. Cette disposition est particulièrement avantageuse car elle permet de pouvoir sélectionner n'importe quand un objet graphique 20 sélectionnable.

Comme indiqué, le procédé 100 permet de gérer, d'éditer et de valider des trajectoires de roulage. Il est précisé qu'à des fins de clarté, dans le présent document, les trajectoires en cours d'édition sont numérotées 2, les trajectoires validées par l'utilisateur sont numérotées 4 et des trajectoires reçues d'une autorité de contrôle aérien sont numérotées 6.

### Réception d'une trajectoire transmise par une autorité de contrôle aérien

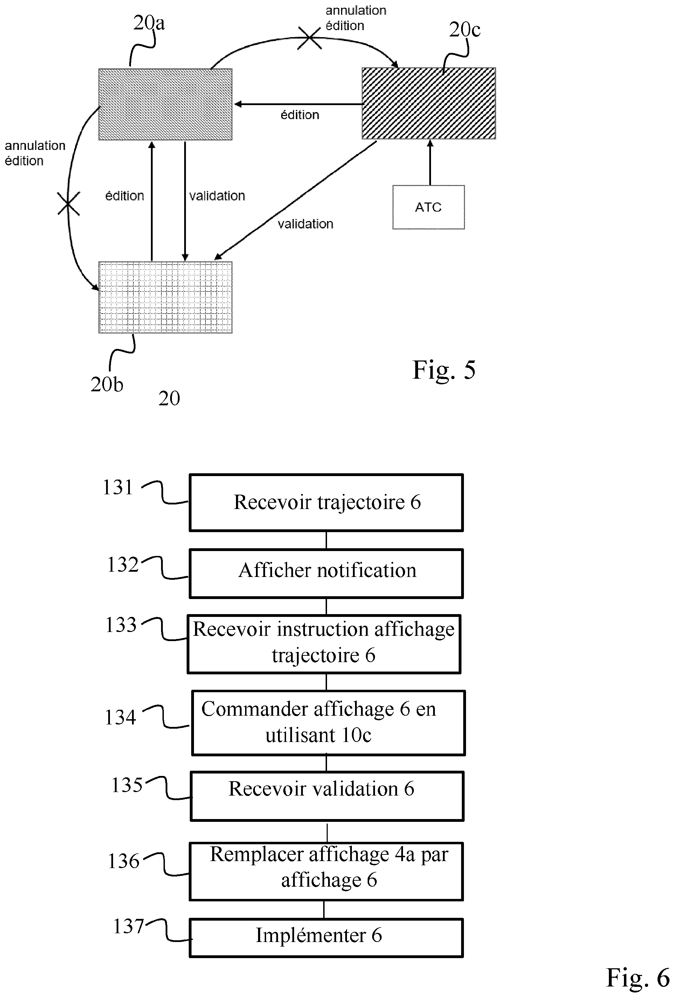

Tel que schématisé sur la Fig. 6, selon une disposition particulière, une trajectoire 6 est reçue d'une autorité de contrôle aérien (aussi abrégé A. T. C.). Cette trajectoire correspond par exemple à une clairance. Selon cette disposition particulière, outre les deux valeurs précitées, le statut associé à une trajectoire de roulage peut aussi prendre la valeur « trajectoire reçue du contrôle aérien ».

Selon cette disposition, le procédé 100 comprend les étapes suivantes :
- recevoir 131 une trajectoire 6 d'une autorité de contrôle aérien ;
- attribuer la valeur « trajectoire reçue du contrôle aérien » au statut associé à la trajectoire 6 ;
- de préférence, afficher 132 une notification à l'attention de l'utilisateur, l'informant de la réception de la trajectoire 6 provenant de l'autorité de contrôle aérien ;
- recevoir 133 de l'utilisateur, via l'interface homme-machine 220, une instruction d'affichage de la trajectoire 6 reçue de l'autorité de contrôle aérien ;
- commander 134 l'affichage sur l'écran 220 d'un tracé de la trajectoire 6 reçue de l'autorité de contrôle aérien, en utilisant une troisième symbolique 10c de tracé ;
- recevoir 135 de l'utilisateur, via l'interface homme-machine 220, une instruction de validation de la trajectoire 6 reçue du contrôle aérien ;
- attribuer la valeur « trajectoire validée » au statut associé à la trajectoire 6 ;
- remplacer 136 l'affichage du tracé de la trajectoire 4a validée par l'utilisateur, par l'affichage du tracé de la trajectoire 6 reçue de l'autorité de contrôle aérien puis validée par l'utilisateur, sur l'écran en utilisant la deuxième symbolique 10b de tracé ;
- implémenter 137 la trajectoire reçue de l'autorité de contrôle aérien 6, puis validée par l'utilisateur, dans une consigne de roulage de l'aéronef.

### Processus d'édition

Tel que schématisé sur la Fig. 2, le processus d'édition 110 comprend notamment les étapes suivantes :
- recevoir 111 de l'utilisateur, par l'interface homme-machine 220, des instructions d'édition et éditer une trajectoire alternative 2b en fonction desdites instructions d'édition ;
- attribuer la valeur « trajectoire en cours d'édition » au statut associé à la trajectoire alternative 2b ;
- commander 112 l'affichage sur l'écran 221 d'un tracé de la trajectoire alternative 2b en cours d'édition en utilisant la première symbolique 10a de tracé ;
- recevoir 114 une instruction de validation de la trajectoire alternative 4b par l'utilisateur via l'interface homme-machine 220 ;
- attribuer la valeur « trajectoire validée » au statut associé à la trajectoire alternative 4b ;
- remplacer 116 l'affichage du tracé de la trajectoire initiale validée 2b par l'utilisateur, par l'affichage du tracé de la trajectoire alternative 4b validée par l'utilisateur, sur l'écran 221 en utilisant la deuxième symbolique 10b de tracé ; et
- implémenter 118 la trajectoire alternative 4b validée par l'utilisateur dans la consigne de roulage de l'aéronef.

Dans le processus d'édition 110, la trajectoire alternative est numérotée 2b avant sa validation, puis 4b après sa validation, en conformité avec les numérotations 2 (trajectoire en cours d'édition), 4 (trajectoire validée) et 6 (trajectoire reçue d'une autorité de contrôle aérien) précitées.

Le processus d'édition 110 peut aussi être mis en oeuvre après la réception et l'affichage d'une trajectoire 6 transmise par une autorité de contrôle aérien. Selon cette disposition, le procédé 100 comprend alors les étapes suivantes :
- recevoir une trajectoire 6 d'une autorité de contrôle aérien ;
- attribuer la valeur « trajectoire reçue du contrôle aérien » au statut associé à la trajectoire 6 ;
- de préférence, afficher une notification à l'attention de l'utilisateur, l'informant de la réception de la trajectoire 6 provenant de l'autorité de contrôle aérien ;
- recevoir de l'utilisateur, via l'interface homme-machine, une instruction d'affichage de la trajectoire 6 reçue de l'autorité de contrôle aérien ;
- commander l'affichage sur l'écran d'un tracé de la trajectoire 6 reçue de l'autorité de contrôle aérien, en utilisant une troisième symbolique 10c de tracé ;
- recevoir de l'utilisateur, par l'interface homme-machine, des instructions d'édition et éditer la trajectoire 6 reçue de l'autorité de contrôle aérien en fonction desdites instructions d'édition ;
- attribuer la valeur « trajectoire en cours d'édition » au statut associé à la trajectoire 6 ;
- commander l'affichage sur l'écran d'un tracé de la trajectoire en cours d'édition en utilisant la première symbolique 10a de tracé ;
- recevoir une instruction de validation de la trajectoire en cours d'édition par l'utilisateur via l'interface homme-machine ;
- attribuer la valeur « trajectoire validée » au statut associé à la trajectoire 6 ;
- remplacer l'affichage du tracé de la trajectoire 4a, 4b validée par l'utilisateur, par l'affichage du tracé de la trajectoire 6 reçue de l'autorité de contrôle aérien puis éditée et validée par l'utilisateur, sur l'écran en utilisant la deuxième symbolique 10b de tracé ;
- implémenter la trajectoire 6 reçue de l'autorité de contrôle aérien puis éditée et validée par l'utilisateur, dans une consigne de roulage de l'aéronef.

### Processus d'affichage indépendant

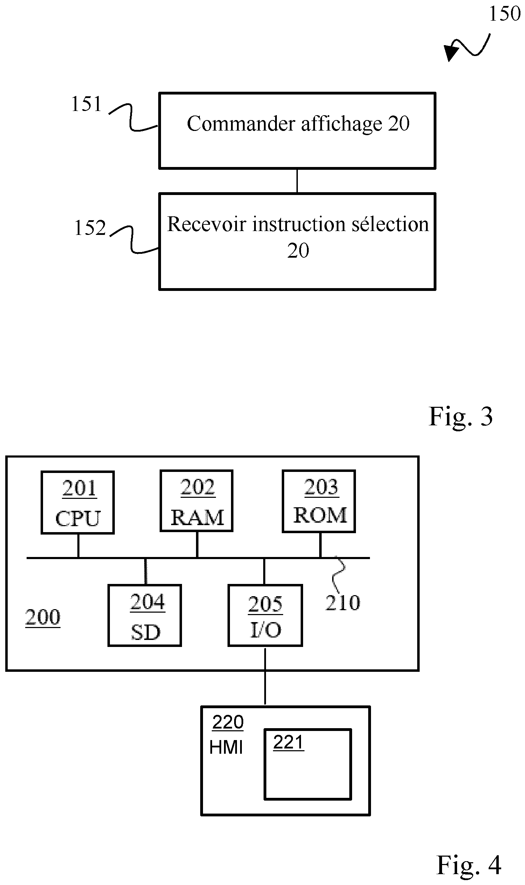

Tel que schématisé sur la Fig. 3, le processus d'affichage 150 indépendant comprend les étapes suivantes :
- commander 151 l'affichage, sur l'écran 221, d'un objet graphique 20 sélectionnable via l'interface homme-machine 220, l'objet graphique 20 étant distinct pour chaque trajectoire 2, 4 ou 6 et ayant un aspect visuel fonction du statut associé à la trajectoire à laquelle est associé cet objet graphique ; et
- recevoir 152 une instruction de sélection, par l'utilisateur, de l'objet graphique 20 via l'interface homme-machine 220 et afficher sur l'écran 221 la trajectoire 2, 4 ou 6 correspondant à l'objet graphique 20 sélectionné.

Il est précisé que l'affichage sur l'écran 221 de la trajectoire correspondant à l'objet graphique 20 sélectionné comprend d'afficher un tracé de la trajectoire en utilisant une symbolique de tracé 10 distincte pour chacune des trajectoires distinctes existantes dans le procédé (i.e. pour chaque trajectoire ayant été éditée et/ou validée). Cette disposition permet d'afficher en parallèle plusieurs trajectoires et de les visualiser en les différenciant.

Il est précisé que par symbolique de tracé 10 différente, il est entendu que chaque tracé présente au moins une caractéristique graphique particulière. Ainsi, à titre d'exemple, il est possible que chaque trajectoire 2, 4 ou 6 soit symbolisée en utilisant une couleur différente. La symbolique de tracé 10 différente pour chaque trajectoire 2, 4 ou 6 permet à un utilisateur d'identifier aisément chaque trajectoire 2, 4 ou 6 sur l'écran 221.

De préférence, l'aspect visuel de l'objet graphique sélectionnable associé à une trajectoire correspond à la symbolique de tracé pour ladite trajectoire. Par exemple, l'objet graphique sélectionnable est représenté avec la même couleur que la trajectoire à laquelle il est associé lorsque la symbolique de tracé correspond à une couleur.

Ainsi, en d'autres termes le processus d'affichage permet que, lorsque l'utilisateur sélectionne un objet graphique 20, le système affiche la trajectoire correspondante. De préférence, l'objet graphique 20 sélectionné est affiché de façon particulière (par exemple surbrillance de l'objet graphique ou d'une partie de l'objet graphique) pour le distinguer des autres objets graphiques 20.

Il est précisé que selon une disposition particulièrement avantageuse, l'objet graphique 20 est assimilable à une icône, et peut être sélectionné par un utilisateur. En outre, en fonction d'une action liée à l'objet graphique 20 (comme par exemple : sélectionner, éditer ou annuler une trajectoire), l'objet graphique 20 peut présenter une caractéristique graphique distinctive. En d'autres termes, pour chaque trajectoire distincte et pour chaque action, le procédé affiche un objet graphique 20 distinct. Ainsi, tel que schématisé sur la Fig. 5, selon un mode de réalisation, un premier objet graphique 20a correspond à une trajectoire 2a en cours d'édition, un deuxième objet graphique 20b correspond à une trajectoire 2b validée par l'utilisateur et un troisième objet graphique 20c correspond à une trajectoire 2c reçue d'une autorité de contrôle aérien (ATC).

D'une manière particulièrement avantageuse, l'étape 150 est effectuée en permanence, en parallèle d'autres étapes du procédé 100. Ainsi, en d'autres termes, les objets graphiques 20 sont affichés en permanence lorsque la trajectoire associée à chaque objet graphique existe. En d'autres termes, un objet graphique 20 est affiché dès lors qu'il existe une trajectoire correspondante.

Chaque objet graphique sélectionnable peut être sélectionné ou désélectionné par des actions d'un utilisateur sur l'objet graphique via l'interface homme-machine 220, par exemple en cliquant sur l'objet ou encore en le touchant dans le cas où l'interface homme-machine 220 est de type tactile.

La sélection à tout moment d'un objet graphique 20 permet d'afficher une trajectoire associée à cet objet graphique. Puis, la sélection d'un autre objet graphique permet d'afficher la trajectoire 2, 4, ou 6 correspondant à l'objet graphique 20 nouvellement sélectionné.

En outre, selon un mode de réalisation particulier, lorsqu'il existe une trajectoire validée, cette trajectoire validée est affichée en permanence, même si l'objet graphique associé n'est pas sélectionné. Les autres trajectoires ne sont affichées que si l'objet graphique correspondant est sélectionné, un seul objet graphique étant sélectionné à un instant donné. Ainsi, l'utilisateur peut comparer la trajectoire correspondante validée avec la trajectoire sélectionnée.

D'une manière particulièrement avantageuse, une trajectoire affichée est affichée sur un fond de carte d'un aéroport sur lequel se situe l'aéronef.

Selon une disposition particulière, la sélection d'un objet graphique 20 affiche la trajectoire 2, 4 ou 6 associée dans une zone d'affichage d'une trajectoire de l'écran (par exemple sur le fond de carte de l'aéroport) ce qui permet également d'éditer ladite trajectoire dans une zone d'affichage d'un champ textuel ou dans la zone d'affichage de la trajectoire. L'édition dans la zone d'affichage d'un champ textuel est réalisée par l'utilisateur en saisissant, via l'interface homme-machine 220, des commandes textuelles d'édition (i.e. des chaines de caractères). L'édition dans la zone d'affichage de la trajectoire est réalisée par l'utilisateur en manipulant, via l'interface homme-machine 220, des éléments de la trajectoire (par exemple des points de passage).

Selon une disposition encore plus particulière, lorsqu'un objet graphique 20 est sélectionné, le fait pour l'utilisateur de sélectionner via l'interface homme-machine 220, la zone d'affichage d'un champ textuel déclenche le processus d'édition de la trajectoire 2, 4 ou 6 correspondante.

D'une manière particulièrement avantageuse, la trajectoire 2 en cours d'édition est affichée simultanément de façon textuelle dans la zone d'affichage d'un champ d'édition textuelle et de façon graphique (i.e. sous la forme d'un tracé) dans la zone d'affichage d'une trajectoire en cours d'édition.

Tel que schématisé sur la Fig. 5, le fait d'éditer une trajectoire affichée a pour effet d'attribuer la valeur « trajectoire en cours d'édition » au statut associé à la trajectoire en cours d'édition. L'objet graphique sélectionnable associé à cette trajectoire en cours d'édition a un aspect visuel correspondant à une trajectoire en cours d'édition. Selon une première alternative, lorsque la trajectoire affichée est une trajectoire préalablement validée ou une trajectoire reçue d'une autorité de contrôle aérien, le fait d'éditer la trajectoire a pour effet de la recopier dans une nouvelle trajectoire en cours d'édition et de conserver inchangée ladite trajectoire validée ou reçue d'une autorité de contrôle aérien. Ainsi, lorsque la trajectoire affichée correspond à une trajectoire préalablement validée, à laquelle est associé un objet graphique sélectionnable 20b, il est créé une trajectoire en cours d'édition à laquelle est associé un objet graphique sélectionnable 20a. Lorsque la trajectoire affichée correspond à une trajectoire reçue d'une autorité de contrôle aérien, à laquelle est associé un objet graphique sélectionnable 20c, il est créé une trajectoire en cours d'édition à laquelle est associé un objet graphique sélectionnable 20a. En cas de validation de la trajectoire en cours d'édition, celle-ci remplace la trajectoire préalablement validée, l'objet graphique sélectionnable 20b associé à la trajectoire validée lui est associé, et l'objet graphique sélectionnable 20a est effacé de l'affichage.

Selon une deuxième alternative, lorsque la trajectoire affichée est une trajectoire préalablement validée ou une trajectoire reçue d'une autorité de contrôle aérien, le fait d'éditer la trajectoire a pour effet de changer le statut de ladite trajectoire, qui prend alors la valeur « trajectoire en cours d'édition ». Ainsi, lorsque la trajectoire affichée correspond à une trajectoire préalablement validée, à laquelle est associé un objet graphique sélectionnable 20b, celui-ci est effacé et un objet graphique sélectionnable 20a est associé à la trajectoire en cours d'édition. Lorsque la trajectoire affichée correspond à une trajectoire reçue d'une autorité de contrôle aérien, à laquelle est associé un objet graphique sélectionnable 20c, celui-ci est effacé et un objet graphique sélectionnable 20a est associé à la trajectoire en cours d'édition. En cas de validation de la trajectoire en cours d'édition, celle-ci devient la trajectoire validée et l'objet graphique sélectionnable 20b associé à la trajectoire validée lui est associé.

Selon une disposition particulière, la trajectoire validée implémentée dans la consigne de roulage de l'aéronef peut être suivie par l'aéronef dans un mode de guidage manuel dans lequel l'utilisateur pilote manuellement l'aéronef en suivant ladite trajectoire. Selon une autre disposition particulière, la trajectoire validée implémentée dans la consigne de roulage de l'aéronef peut être suivie par l'aéronef dans un mode de guidage automatique dans lequel le système informatique de l'aéronef pilote automatiquement l'aéronef le long de ladite trajectoire.

Selon une disposition particulière, un objet graphique distinct est utilisé pour afficher la trajectoire validée et implémentée, en fonction du mode de guidage de l'aéronef. Comme indiqué précédemment, typiquement, l'objet graphique distinct peut être une couleur de tracé distinct. Cette disposition permet très avantageusement à un utilisateur d'identifier rapidement le mode de guidage de l'aéronef.

### Edition de plusieurs trajectoires

Selon une disposition technique particulièrement avantageuse, le processus d'édition 110 permet d'éditer plusieurs trajectoires alternatives distinctes. Ainsi, un utilisateur (typiquement un pilote ou un copilote) peut éditer plusieurs trajectoires alternatives 10 distinctes.

Lorsque plusieurs trajectoires alternatives sont affichées, le procédé 100 comprend une étape 120 consistant à sélectionner une trajectoire alternative 10 parmi les plusieurs trajectoires alternatives distinctes, puis obtenir une validation de la trajectoire alternative 10 sélectionnée.

### Annulation d'une trajectoire

D'une manière particulièrement avantageuse, le procédé 100 peut aussi comprendre une étape consistant à annuler une trajectoire 2, 4 ou 6. En d'autres termes, le procédé 100 permet à tout moment d'annuler une trajectoire, qu'elle soit en cours d'édition, validée ou affichée.

Selon une disposition particulièrement avantageuse, l'annulation d'une trajectoire peut être réalisée en sélectionnant un objet graphique 20 spécifique dont la sélection émet une instruction d'annulation.

### Système informatique

Selon un autre aspect, il est proposé un système informatique 200 comprenant de la circuiterie électronique configurée pour implémenter un procédé 100 de gestion de trajectoires de roulage d'un aéronef.

Tel que schématisé sur la Fig. 4, le système informatique 200 peut comporter, reliés par un bus de communication 210 : un processeur 201 ; une mémoire vive 202 ; une mémoire morte 203, par exemple de type ROM (« Read Only Memory » en anglais) ou EEPROM (« Electrically-Erasable Programmable Read Only Memory » en anglais) ; une unité de stockage 204, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces d'entrées-sorties 205.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire de la mémoire vive 202 des instructions et de les exécuter. Ces instructions forment un programme d'ordinateur permettant l'implémentation, par le processeur 201, du procédé 100 et des étapes décrits ici.

Tout ou partie du procédé 100 et des étapes décrits ci-avant peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant dédié, par exemple un composant FPGA (« Field Programmable Gate Array » en anglais) ou ASIC (« Application-Specific Integrated Circuit » en anglais). D'une manière générale, le système informatique 200 comporte de la circuiterie électronique adaptée et configurée pour implémenter, sous forme logicielle et/ou matérielle, les procédé et étapes décrits ci-avant en relation avec le système informatique 200 en question.

En outre, selon une disposition particulière, le système informatique 200 comprend une interface homme-machine 220 qui comprend au moins un écran d'affichage présentant au moins une zone d'affichage de trajectoires (trajectoire validée 4, trajectoire 2 en cours d'édition, trajectoire 6 reçue d'une autorité de contrôle aérien) et au moins une zone d'affichage d'un objet graphique 20 sélectionnable. Cet écran correspond par exemple à un écran de navigation, aussi appelé ND (« Navigation Display » en anglais).

Selon une disposition encore plus particulière, l'écran 221 comprend une zone d'affichage d'un champ textuel. La zone d'affichage d'un champ textuel permet à l'utilisateur de saisir un texte (i.e. une chaine de caractères) correspondant à des instructions d'édition d'une trajectoire.

### Aéronef

Selon un autre aspect, il est proposé un aéronef comprenant le système informatique 200.

## Revendications

1. Procédé (100) de gestion de trajectoires de roulage d'un aéronef, l'aéronef comprenant au moins un système informatique (200) comprenant de la circuiterie électronique (201) et une interface homme-machine (220) comprenant au moins un écran d'affichage (221), le procédé étant implémenté par le système informatique (200) et **caractérisé en ce qu'**un statut est associé à chaque trajectoire de roulage et **en ce qu'**il comprend au moins les étapes suivantes :
- recevoir (101) d'un utilisateur, par l'interface homme-machine (220), des instructions d'édition et éditer une trajectoire initiale (2a) en fonction desdites instructions ;
- associer à la trajectoire initiale (2a) un statut dont la valeur correspond à une trajectoire en cours d'édition ;
- commander (102) l'affichage sur l'écran (221) d'un tracé de la trajectoire initiale (2a) en cours d'édition, en utilisant une première symbolique (10a) de tracé ;
- recevoir (104) une instruction de validation de la trajectoire initiale (4a) par l'utilisateur via l'interface homme-machine (220) ;
- associer à la trajectoire initiale (4a) un statut dont la valeur correspond à une trajectoire validée ;
- commander l'affichage (106) sur l'écran (221) d'un tracé de la trajectoire initiale (4a) validée par l'utilisateur, en utilisant une deuxième symbolique (10b) de tracé ;
- implémenter (108) la trajectoire initiale validée (4a) par l'utilisateur dans une consigne de roulage de l'aéronef ;
le procédé (100) comprenant en outre un processus d'édition (110) qui comprend les étapes suivantes :
- recevoir (111) de l'utilisateur, par l'interface homme-machine, des instructions d'édition et éditer une trajectoire alternative (2b) en fonction desdites instructions d'édition ;
- associer à la trajectoire alternative (2b) un statut dont la valeur correspond à une trajectoire en cours d'édition ;
- commander l'affichage (112) sur l'écran (221) d'un tracé de la trajectoire alternative (2b) en cours d'édition en utilisant la première symbolique (10a) de tracé ;
- recevoir (114) une instruction de validation de la trajectoire alternative (4b) par l'utilisateur via l'interface homme-machine (220) ;
- associer à la trajectoire alternative (4b) un statut dont la valeur correspond à une trajectoire validée ;
- remplacer (116) l'affichage du tracé de la trajectoire initiale validée par l'utilisateur (4a), par l'affichage du tracé de la trajectoire alternative validée par l'utilisateur (4b), sur l'écran (221) en utilisant la deuxième symbolique (10b) de tracé ;
- implémenter (118) la trajectoire alternative validée par l'utilisateur (4b) dans la consigne de roulage de l'aéronef ; et,
le procédé comprenant en parallèle un processus d'affichage (150) indépendant qui comprend :
- commander l'affichage (151) sur l'écran d'un objet graphique (20) sélectionnable via l'interface homme-machine, l'objet graphique étant distinct pour chaque trajectoire (2, 4, 6) et ayant un aspect visuel fonction du statut associé à la trajectoire à laquelle est associé cet objet graphique ; et
- recevoir (152) une instruction de sélection par l'utilisateur de l'objet graphique (20) via l'interface homme-machine (220) et afficher sur ledit écran la trajectoire (2, 4, 6) correspondant à l'objet graphique (20) sélectionné.

2. Procédé (100) selon la revendication 1, comprenant en outre les étapes suivantes :
- recevoir (152) une instruction de sélection par l'utilisateur, via l'interface homme-machine (220), d'un objet graphique (20b, 20c) associé à une trajectoire validée ou à une trajectoire reçue d'une autorité de contrôle aérien et afficher sur ledit écran la trajectoire correspondant à l'objet graphique (20) sélectionné ;
- recevoir une instruction d'édition par l'utilisateur, via l'interface homme-machine (220), de la trajectoire affichée sur l'écran ;
- associer à ladite trajectoire un statut dont la valeur correspond à une trajectoire en cours d'édition ;
- commander l'affichage sur l'écran (221) d'un tracé de la trajectoire en cours d'édition, en utilisant la première symbolique (10a) de tracé ;
- afficher un objet graphique sélectionnable (20a) associé à la trajectoire en cours d'édition ;
- éditer la trajectoire en cours d'édition en fonction d'instructions reçues de l'utilisateur et mettre à jour l'affichage sur l'écran (221) du tracé de la trajectoire en cours d'édition, en utilisant la première symbolique (10a) de tracé ;
- recevoir une instruction de validation de la trajectoire en cours d'édition par l'utilisateur via l'interface homme-machine (220) ;
- associer à la trajectoire un statut dont la valeur correspond à une trajectoire validée ;
- afficher un objet graphique sélectionnable (20b) associé à la trajectoire validée ;
- remplacer l'affichage du tracé d'une trajectoire préalablement validée par l'utilisateur (4a, 4b), par l'affichage du tracé de la trajectoire validée par l'utilisateur, sur l'écran (221) en utilisant la deuxième symbolique (10b) de tracé ;
- implémenter la trajectoire validée par l'utilisateur dans la consigne de roulage de l'aéronef.

3. Procédé (100) selon l'une des revendications 1 ou 2, comprenant l'édition de plusieurs trajectoires alternatives (4a) distinctes.

4. Procédé (100) selon l'une quelconque des revendications précédentes, comprenant de recevoir une instruction d'annulation, par une sélection de l'objet graphique (20) par l'utilisateur sur l'interface homme-machine (220) et, comprenant d'annuler la trajectoire (2, 4, 6) correspondant à l'objet graphique (20).

5. Procédé (100) selon l'une quelconque des revendications précédentes, comprenant de recevoir une instruction d'édition (111), par une sélection de l'objet graphique (20) par l'utilisateur sur l'interface homme-machine (220) et d'implémenter le processus d'édition (110) de la trajectoire correspondant à l'objet graphique (20).

6. Procédé (100) selon l'une quelconque des revendications précédentes comprenant de :
- recevoir (131) une trajectoire (6) d'une autorité de contrôle aérien ;
- recevoir (133) de l'utilisateur, via l'interface homme-machine (220), une instruction d'affichage de la trajectoire (6) reçue de l'autorité de contrôle aérien ;
- associer à la trajectoire (6) un statut dont la valeur correspond à une trajectoire reçue d'une autorité de contrôle aérien ;
- commander (134) l'affichage sur l'écran d'un tracé de la trajectoire (6) reçue de l'autorité de contrôle aérien, en utilisant une troisième symbolique de tracé (10c) ;
- recevoir (135) de l'utilisateur, via l'interface homme-machine, une instruction de validation de la trajectoire (6) reçue du contrôle aérien ;
- associer à la trajectoire (6) un statut dont la valeur correspond à une trajectoire validée ;
- remplacer (136) l'affichage du tracé de la trajectoire (4a, 4b) validée par l'utilisateur, par l'affichage du tracé de la trajectoire (6) reçue de l'autorité de contrôle aérien puis validée par l'utilisateur, sur l'écran en utilisant la deuxième symbolique (10b) de tracé ;
- implémenter (137) la trajectoire (6) reçue de l'autorité de contrôle aérien puis validée par l'utilisateur, dans une consigne de roulage de l'aéronef.

7. Procédé (100) selon l'une quelconque des revendications 1 à 5 comprenant de :
- recevoir (131) une trajectoire (6) d'une autorité de contrôle aérien ;
- recevoir (133) de l'utilisateur, via l'interface homme-machine (220), une instruction d'affichage de la trajectoire (6) reçue de l'autorité de contrôle aérien ;
- associer à la trajectoire (6) un statut dont la valeur correspond à une trajectoire reçue d'une autorité de contrôle aérien ;
- commander (134) l'affichage sur l'écran d'un tracé de la trajectoire (6) reçue de l'autorité de contrôle aérien, en utilisant une troisième symbolique de tracé (10c) ;
- recevoir (111) de l'utilisateur, par l'interface homme-machine (220), des instructions d'édition et éditer la trajectoire reçue de l'autorité de contrôle aérien en fonction desdites instructions d'édition ;
- associer à la trajectoire (6) un statut dont la valeur correspond à une trajectoire en cours d'édition ;
- commander (112) l'affichage sur l'écran (221) d'un tracé de la trajectoire en cours d'édition en utilisant la première symbolique (10a) de tracé ;
- recevoir (114) de l'utilisateur, via l'interface homme-machine, une instruction de validation de la trajectoire (6) en cours d'édition ;
- associer à la trajectoire (6) un statut dont la valeur correspond à une trajectoire validée ;
- remplacer (136) l'affichage du tracé de la trajectoire (4a, 4b) validée par l'utilisateur, par l'affichage du tracé de la trajectoire (6) reçue de l'autorité de contrôle aérien puis éditée et validée par l'utilisateur, sur l'écran en utilisant la deuxième symbolique (10b) de tracé ;
- implémenter (137) la trajectoire (6) reçue de l'autorité de contrôle aérien puis éditée et validée par l'utilisateur, dans une consigne de roulage de l'aéronef.

8. Système informatique (200) de gestion d'une trajectoire de roulage d'un aéronef comprenant de la circuiterie électronique pour implémenter le procédé (100) de gestion d'une trajectoire de roulage d'un aéronef dans lequel un statut est associé à chaque trajectoire de roulage, le procédé comprenant au moins les étapes suivantes :
- recevoir d'un utilisateur, par l'interface homme-machine, des instructions d'édition et éditer (101) une trajectoire initiale (2a) en fonction desdites instructions ;
- associer à la trajectoire initiale (2a) un statut dont la valeur correspond à une trajectoire en cours d'édition ;
- commander (102) l'affichage sur l'écran d'un tracé de la trajectoire initiale (2a) en cours d'édition, en utilisant une première symbolique (10a) de tracé ;
- recevoir (104) une instruction de validation de la trajectoire initiale (4a) par l'utilisateur via l'interface homme-machine (220) ;
- associer à la trajectoire initiale (4a) un statut dont la valeur correspond à une trajectoire validée ;
- commander l'affichage (106) sur l'écran (221) d'un tracé de la trajectoire initiale (4a) validée par l'utilisateur, en utilisant une deuxième symbolique (10b) de tracé ;
- implémenter (108) la trajectoire initiale validée (4a) par l'utilisateur dans une consigne de roulage de l'aéronef ;
le procédé (100) comprenant en outre un processus d'édition (110) qui comprend les étapes suivantes :
- recevoir (111) de l'utilisateur, par l'interface homme-machine, des instructions d'édition et éditer une trajectoire alternative (2b) en fonction desdites instructions d'édition ;
- associer à la trajectoire alternative (2b) un statut dont la valeur correspond à une trajectoire en cours d'édition ;
- commander l'affichage (112) sur l'écran (221) d'un tracé de la trajectoire alternative (2b) en cours d'édition en utilisant la première symbolique (10a) de tracé ;
- recevoir (114) une instruction de validation de la trajectoire alternative (4b) par l'utilisateur via l'interface homme-machine (220) ;
- associer à la trajectoire alternative (4b) un statut dont la valeur correspond à une trajectoire validée ;
- remplacer (116) l'affichage du tracé de la trajectoire initiale validée par l'utilisateur (4a), par l'affichage du tracé de la trajectoire alternative validée par l'utilisateur (4b), sur l'écran (221) en utilisant la deuxième symbolique (10b) de tracé ;
- implémenter (118) la trajectoire alternative validée par l'utilisateur (4b) dans la consigne de roulage de l'aéronef ; et
le procédé comprenant en parallèle un processus d'affichage (150) indépendant qui comprend :
- commander l'affichage (151) sur l'écran d'un objet graphique (20) sélectionnable via l'interface homme-machine, l'objet graphique étant distinct pour chaque trajectoire (2, 4, 6) et ayant un aspect visuel fonction du statut associé à la trajectoire à laquelle est associé cet objet graphique ; et
- recevoir (152) une instruction de sélection par l'utilisateur de l'objet graphique (20) via l'interface homme-machine (220) et afficher sur l'écran la trajectoire (2, 4, 6) correspondant à l'objet graphique (20) sélectionné.

9. Système informatique (200) selon la revendication 8, dans lequel le procédé comprend en outre les étapes suivantes :
- recevoir (152) une instruction de sélection par l'utilisateur, via l'interface homme-machine (220), d'un objet graphique (20b, 20c) associé à une trajectoire validée ou à une trajectoire reçue d'une autorité de contrôle aérien et afficher sur ledit écran la trajectoire correspondant à l'objet graphique (20) sélectionné ;
- recevoir une instruction d'édition par l'utilisateur, via l'interface homme-machine (220), de la trajectoire affichée sur l'écran ;
- associer à ladite trajectoire un statut dont la valeur correspond à une trajectoire en cours d'édition ;
- commander l'affichage sur l'écran (221) d'un tracé de la trajectoire en cours d'édition, en utilisant la première symbolique (10a) de tracé ;
- afficher un objet graphique sélectionnable (20a) associé à la trajectoire en cours d'édition ;
- éditer la trajectoire en cours d'édition en fonction d'instructions reçues de l'utilisateur et mettre à jour l'affichage sur l'écran (221) du tracé de la trajectoire en cours d'édition, en utilisant la première symbolique (10a) de tracé ;
- recevoir une instruction de validation de la trajectoire en cours d'édition par l'utilisateur via l'interface homme-machine (220) ;
- associer à la trajectoire un statut dont la valeur correspond à une trajectoire validée ;
- afficher un objet graphique sélectionnable (20b) associé à la trajectoire validée ;
- remplacer l'affichage du tracé d'une trajectoire préalablement validée par l'utilisateur (4a, 4b), par l'affichage du tracé de la trajectoire validée par l'utilisateur, sur l'écran (221) en utilisant la deuxième symbolique (10b) de tracé ;
- implémenter la trajectoire validée par l'utilisateur dans la consigne de roulage de l'aéronef.

10. Système informatique (200) selon l'une des revendications 8 ou 9 dans lequel l'écran d'affichage (221) présente au moins une zone d'affichage d'une trajectoire et au moins une zone d'affichage d'un objet graphique (20) sélectionnable.

11. Système informatique (200) selon la revendication 10, dans lequel l'au moins une zone d'affichage d'une trajectoire est prévue pour afficher au moins l'une parmi une trajectoire validée par un utilisateur (4a, 4b), une trajectoire en cours d'édition (2) et une trajectoire (6) reçue d'une autorité de contrôle aérien.

12. Système informatique (200) selon l'une quelconque des revendications 10 ou 11, comprenant au moins une zone d'affichage d'un champ textuel.

13. Aéronef comprenant un système informatique (200) selon l'une quelconque des revendications 9 à 12.

14. Produit programme d'ordinateur comprenant des instructions de code de programme pour exécuter le procédé (100) selon l'une quelconque des revendications 1 à 7, lorsque lesdites instructions sont exécutées par au moins un processeur (201).

15. Support de stockage non transitoire sur lequel est stocké un programme d'ordinateur comprenant des instructions de code de programme pour exécuter le procédé (100) selon l'une quelconque des revendications 1 à 7, lorsque lesdites instructions sont lues depuis ledit support de stockage non transitoire et exécutées par un processeur (201).
